# EUROPEAN PATENT APPLICATION

(11) **EP 1 813 423 A1**
(43) Date of publication of application: **01.08.2007**
(21) Application number: 06001711.8
(22) Date of filing: 27.01.2006
(51) Int. Cl.: B32B 27/32

(54) **Transparent, stiff and printable polypropylene blown films**

(71) Applicant: RKW AG Rheinische Kunststoffwerke, 67547 Worms (DE)
(72) Inventor: GREFENSTEIN, Dr. Achim, 67122 Altrip (DE); MÄKITALO, Tapio, 28630 Pomarkku (FI); HERRANEN, Marita, 28100 Pori (FI)
(74) Representative: Wagner, Jutta

(57) **Abstract**

The invention relates to transparent and stiff coextruded polypropylene blown films with ink-printable skin layer(s) bonded to the base or core layer without intermediate layers, whereby the core layer or base layer comprises at least 50 % of of at least one of a polypropylene homopolymer, a polypropylene random copolymer or a heterophasic polypropylene copolymer and the skin layer(s) consists (consist) of either a mixture of at least 50% of low density polyethylene and at least 10 % metallocene linear low density polyethylene and up to 5 % of common additives or a polypropylene random copolymer with a MFI between 0.8 and 3.0 g/10 min (ISO1133 at 230°C, 2.16 kg) mixed with up to 50% of a low density polyethylene, linear low density polyethylene or metallocene linear low density polyethylene, MFI 0,5 to 3,5 g/10min, and up to 5 % common additives. The films are useful for label applications and for lamination.

## Description

The present invention relates to films suitable for the manufacture of labels.

Labels consist generally of a label facestock, an adhesive and a release liner. Usually, the facestock is prepared, then coated with adhesive and brought together with the release liner. Subsequently, the labels are die-cut, the matrix of label facestock is stripped off and the label positioned on the liner wound on a roll or stored otherwise. The actual labelling of substrates is achieved mechanically by guiding the label on the release liner around an edge whereby the label separates from the liner and is transferred to the substrate. This requires a sufficient stiffness of the label facestock.

On the other hand the label has to conform smoothly to the contour of the substrate also when this is curved or bent and even to flexible substrates like squeezable plastic bottles and the like during the actual deformation. Further requirements are transparency, gloss, printability of the surface and of course low cost of material and manufacture of the labels.

There have been numerous proposals for facestock materials meeting either all requirements to a certain extent or some very well and others only poorly or not at all. Most of them rely on multilayer material.

US 4,713,273 proposes to use a multilayer facestock comprising a coextrudate of a relatively thick core or base layer with at least one thinner skin layer. As core, there is preferred a polyethylene or polypropylene or polypropylene copolymer with a flexural modulos of 130,000 to 250,000 psi at 73 °F, and as skin layer polyethylenevinylacetate or polyvinylchloride is preferred. The core provides stiffness and the skin printability. This material is difficult to recycle.

According to US 5,516,393 a core made of polypropylene and a skin of polyethylene is used. For sufficient bonding of the coextruded core and skin layers it is necessary to provide tie layers between them. Similar label materials are described in DE 101 47 538 and DE 102 28 273. All of these require sophisticated manufacturing, and the composition has to be watched closely.

It is further known to increase the stiffness of films by stretching, either in one or in two directions. One example is US 5,186,782, describing mono- and multilayer films which are stretched in one direction to achieve a stiffness of 20 to 45 Gurley, while in the other direction stretching is omitted or much less so that the stiffness in the transverse direction is 75 % or less of the stiffness in the first direction. Again, stretching is no simple step in production, the more so in cases requiring a specific stiffness to be reached exclusively by setting the right stretching conditions.

An important factor for the costs is the thickness of the films, down gaging, i.e. using thinner films, is restricted by the required stiffness.

Another consideration is the manufacturing. Blown films would be preferred because of the flexibility of the blow process, the usually lower scrap rate and the better overall economics compared to the casting process, but normally blown films show poorer thickness profiles than cast films. Furthermore, the transparency, when using high crystalline polymers like high densitiy polyethylene or polypropylene as stiffness promoters, is poorer due to the slower cooling, resulting in a higher crystallinity as compared to cast films.

Polypropylene is a material imparting good mechanical properties but often problems occur with the optical properties, such as high haze or poor gloss.

EP 1 514 893 discloses polyproyplene materials suitable to prepare blown films which show good mechanical properties and excellent optical properties. In this document it is additionally stated that multilayer films can be made without tie layers if a first layer of this polyproplylene is combined with a second layer of polyethylene made with a single site catalyst, i.e. a metallocene catalysed polyethylene. The document also mentions that other polyethylene materials need a tie layer for sufficient adhesion.

So far it is assumed that it is not possible to print on polypropylene layers, manufacturers recommend an extra coating for applications necessitating printing. This is a severe draw back since other skin layers like polyethylene or ethylenevinyl acetate allow direct printing at least after corona treatment.

Surprisingly it has now been found that it is possible to obtain multilayer blown films with a polypropylene-based core or base layer when either the skin layer(s) comprise a mixture of at least 50 % low density polyethylene and from 5 to 50 % linear low density polyethylene or a polypropylene random copolymer with a MFI between 0.8 and 3.0 g/10 min (ISO 1133, 230 °C, 2.16 kg) mixed with up to 50% low density polyethylene or linear low density polyethylene (both MFI 0,5 to 3,5 g/10min) is used as the skin layer(s).

The resulting film has excellent optical properties and very balanced mechanical properties making it ideally suited for label applications like self-adhesive labels, roll-on, shrink-on, or in-mould labels. Another promising use is lamination to films from polyethylene terephthalate, polyamide or ethylene-vinylalcohol polymers or to aluminium foils, e.g. for packaging applications.

The core or base layer comprises at least 50 %, preferably at least 60 %, and most preferably at least 70 % of at least one of a polypropylene homopolymer, a polypropylene random copolymer or a heterophasic polypropylene copolymer.

The core layer can consist only of PP homopolymer. Preferably the core or base layer comprises an amount of up to 80 % of polypropylene random copolymer and 20 to 100 % of polypropylene homopolymer. Particularly preferred are 5 % to 50% of polypropylene random copolymer.

Comonomers for the polypropylene random copolymer are ethylene olefins or other α-olefins in an amount of up to 30 %, with respect to high stiffness less than 15 % being preferred.

The core or base layer may further comprise up to 50 %, preferably up to 35 %, especially preferably up to 25 % of linear low density polyethylene, low density polyethylene or high density polyethylene.

Linear low density polyethylene (LLDPE) is a copolymer of ethylene with one or more α-olefin(s), like butene, hexene ocetene or the like. If the LLDPE is made on single site or metallocene catalysts special properties result. Those materials are designated m-LLDPE and are preferred according to the present invention due to their linear structure and hence good compatibility with the polypropylene.

The skin layer or skin layers comprise either a mixture of at least 50 % low density polyethylene and from 5 to 50 % linear low density polyethylene or a polypropylene random copolymer mixed with up to 50% low density polyethylene or linear low density polyethylene.

The skin layer(s) may additionally comprise common additives like colorants, mineralic fillers, processing aids, antistatic agents, antislip agents, stabilizers, antioxidants, acid neutralizing agents, ultraviolet absorbers, antiblocking agents and antifogging agents. The additives are used in their usual amounts, typically up to 5 % additives are present.

The mixture of LDPE and LLDPE preferably contains at 10 to 30 % LLDPE. It is further preferred that at least 70 % LDPE are present.

The mixture of a polypropylene random copolymer with low density polyethylene or linear low density polyethylene preferably comprises up to 40 % and especially up to 30 % polyethylene. The admixture of polyethylene serves to improve printability. The polyethylene may be a low density polyethylene or linear low density polyethylene. The linear low density polyethylene may be a LLDPE or m-LLDPE as described above.

The skin layer(s) may also consist of polypropylene random copolymer without any polyethylene.

For skin layers with polypropylene it is preferred to improve printability, as an alternative to the admixture of polyethylene as described above, with up to 10 % by weight, preferably not more than 5 % by weight, of a polar, anionic or preferably cationic additive. Suitable substances are e.g. maleimides of styrene or ionomeric resins like, e.g. Surlyn from DuPont. They build up electrical charge on the surface and hence improve the ink anchorage.

In a first preferred embodiment the skin layer or the skin layers comprise a mixture of at least 50 % low density polyethylene (LDPE) and from 5 to 50 %, preferably 5 to 40 %, of m-LLDPE. In this embodiment, the core or base layer is preferably a mixture of a polypropylene homopolymer, a polypropyleme random copolymer or a heterophasic polypropylene copolymer with m-LLDPE.

In a second preferred embodiment, the skin layer or the skin layers comprise a polypropylene random copolymer with a MFI between 0.8 and 3.0 g/10 min (ISO 1133, 230 °C, 2.16kg), preferably a material according to EP 1 514 893, mixed with up to 50% of a LDPE, LLDPE or m-LLDPE, MFI 0,5 to 3,5 g/10min, in order to improve printability without the need of top-coating. In this embodiment the core or base layer is preferably made from 0 to 80 % of polypropylene random copolymer (random PP) and 20 to 99 % of polypropylene homopolymer (PP homopolymer), preferably from 5 to 50 % of random PP and 95 to 50 % of PP homopolymer.

Films are manufactured by the blown film process in a manner known as such. Preferred embodiments are described in the examples below.

The ratio of the core or base layer thickness to skin layer thickness usually ranges from 1:1 to 1:15, preferably from 1:1 to 1:5, especially from 1:1 to 1:4.

The overall film thickness, i.e. core and two skin layers or base and one skin layer is typically from 20 to 80 µm, preferably from 50 to 70 µm, and may be as low as 20 µm.

Preferably the film is corona treated to increase printability, especially in the case of skin layer(s) from polypropylene random copolymer. Typical conditions are ≥ 42 dyn, preferably ≥ 44 dyn and especially preferred ≥ 46 dyn. It was found that the standard treatment for polyethylene of 42 dyn does not give the same good results for a propylene random copolymer. Ink adhesion of typical UV- or solvent-based flexo inks is significantly improved by a higher treatment level, especially in combination with a retreatment immediately before printing and by adding a minor amount of a polyethylene resin to the polypropylene random-copolymer.

It is possible to stretch the film in the machine direction and/or in the cross direction. Preferably the film is only stretched in the machine direction. In-line stretching, i.e. stretching directly after the blown film extrusion without rewinding, is preferred. Preferred stretching ratios are 1:3 to 1:8 in dependence of the temperatures, which are set to 80-120 °C with polyethylene skin and to 110 - 150 °C with polypropylene skin. Depending on the required thermal shrinkage level for the different label applications, an annealing step directly after stretching can be useful. Thus, the film is guided, without any further stretching, over several additional rolls heated to temperatures above or equal to, the stretching temperature.

Labels can be manufactured from the films in a manner known as such and described in the various patents mentioned hereinbefore. It is to be noted that the films according to the invention can be easily die-cut and can be dispensed easily. They show perfect conformance to uneven contours or during deformation of flexible substrates. Small web printing is easy due to the good ink adhesion and the very good thickness tolerance.

Other applications include the lamination to other packaging films, especially barrier film materials such as polyethylene terephthalate, polyamide, ethylenevinyl alcohol, aluminium or metallized films. In these lamination processes, hot-melt glues are typically used to promote adhesion. The high transparency when laminated onto transparent films, and the high stiffnes in combination with a good thickness profile combined with good sealability and printability of the polypropylene blown films are important for this type of application.

The invention will be illustrated further by the following examples. However, it is in no way restricted to the specififc embodiments described therein. Throughout this application, all percentages are by weight, unless stated otherwise.

### Examples

### Measured properties:

Haze, gloss, stiffness, line output and the standard deviation of the thickness profile were determined 24 hours after extrusion, according to the standards listed below.

### Haze

Haze was determined according to ASTM D 1003.

### Gloss

Gloss (60°) was measured according to ASTM D 2457.

### Stiffness

Stiffness was determined as flexural modulus according to DIN EN ISO 527-3, in machine direction (MD) and in some cases in cross direction (CD).

### Determination of film thickness with capacitive sensor

A Benchmark thickness gauge was used for measuring the thickness profile of a film sample. The thickness profile was measured in the cross direction of the film. The film transporter conveyed the film sample through the thickness measuring gauge which was equipped with a capacitive sensor. The thickness measurement unit measured the thickness continuously and calculated the average thickness and the standard deviation 1-σ. The maximum and minimum thicknesses were displayed.

### Measurement of interlayer adhesion

The interlayer adhesion was measured with a tensile testing machine as peeling force. The sample width was 25 mm, the test speed was 100 mm/min. The layers were separated from one another to an extent that they could be fixed in the clamps. The layers were peeled off by means of the tensile strength tester, and the peeling force was recorded over a distance of 50 mm. The average peeling force, which is a good measure for the interlayer adhesion, was determined.

The following materials were used:

| **Material** | **MFI (g/10 min)** | **Density (g/cm³)** |
|---|---|---|
| PP homopolymer, nucleated | 2.0 | 0.905 |
| random PP | 1.5 | 0.905 |
| EVA with 9% VA | 3.0 | 0.927 |
| LDPE | 3.0 | 0.934 |
| m-LLDPE | 2,0 | 0,918 |
| LDPE | 1,2 | 0,922 |

### Example 1:

### Processing conditions:

On a production three-layer coextrusion blown film line films in a width of 2040 mm were produced. The skin layer consisted of a PP random copolymer with a MFI of 1.5 g/10 min. The core consisted of different PP-grades and PP-mixtures (see table below). The thickness ratio of the core layer to one skin layer of the symmetrical structure was set to 1:3. The overall thickness was 60 µm. The melt temperature of the core layer was 213°C and that of the skin layers was 202 °C. The blow-up ratio was 1:2. The air cooling temperature was 11°C for the inner cooling and 8 °C for the outer cooling. The properties mentioned were measured 3 weeks after extrusion in this example.

The results are shown in table 1 below:

| **Core layer composition** | **Invention: 100% PP homopolymer, MFI 2.0** | **Invention: 30% PP random copolymer + 70% PP homopolymer** | **Comparison: Thin PE skin on PP core acc. to DE 198 59 789** |
|---|---|---|---|
| Thickness profile deviation [µm] | 2.2 | 1.6 | - |
| Modulus in MD [MPa] | 1071 | 1049 | 840 |
| Gloss 60° | 118 | 118 | 93 |
| Haze [%] | 4 | 4 | 12 |
| Line output [kg/h] | 457 | 514 | - |
| Interlayer adhesion [N/25 mm] | Not peelable | Not peelable | Not measurable (too thin to peel) |

It can be clearly seen that films according to the invention (with PP skin) show much higher stiffness compared to films with PE skin, even when the skin layer is relatively thin. Furthermore, the optical properties (transparency and gloss) of the films according to the invention are much better.

### Example 2:

### Processing conditions:

On a production three-layer coextrusion blown film line films in a width of 2,040 mm were produced. The core layer consisted of a mixture of 80 % of PP homopolymer and 20 % of m-LLDPE. The ratio of LDPE to m-LLDPE in the skin layers was varied as mentioned in the table below. The thickness ratio of the core layer to one skin layer of the symmetric structure was set to 1:3. The overall thickness was 65 µm. The melt temperature of core layer material was 210°C, that of the skin layers was 185 °C. The blow-up ratio was 1:2. The air cooling temperature was 11 °C for the inner cooling and 8 °C for the outer cooling.

Table 2 below shows the results of the measurements described above.

| **Skin layer composition** | **Invention: 25% m-LLDPE, MFI 2.0 75% LDPE, MFI 3.0** | **Comparison: 70% LDPE, MFI 3.0 30% EVA, MFI 3.0** | **Comparison: 75% m-LLDPE, MFI 1.3 25% LDPE, MFI 1.2** |
|---|---|---|---|
| Thickness profile deviation [µm] | 2.1 | 3.1 | 2.6 |
| Modulus in MD [MPa] | 737 | 667 | 662 |
| Gloss 60° | 118 | 72 | 105 |
| Haze [%] | 6 | 16 | 10 |
| Line output [kg/h] | 555 | 485 | 523 |
| Interlayer adhesion [N/25 mm] | 1.6 | 0.6 | 3.3 |

The film according to the invention showed a much better optical appearance and thickness profile despite of the higher line output which normally leads to a less stable bubble and hence a worse thickness profile. Furthermore the stiffness of the film according to the invention was higher (a measurement three weeks following extrusion even showed a value of 840 MPa due to the ongoing crystallization). Without any m-LLDPE in the skin layer, a bad interlayer adhesion which was not acceptable was obtained even when EVA was added as compatibilizer. Although the interlayer adhesion increases with an increasing amount of m-LLDPE in the skin layer, the value for the film according to the invention is high enough for practical use as a self-adhesive label film.

### Example 3:

### Processing conditions:

On a laboratory three-layer coextrusion blown film line, films having a width of 600 mm were produced. The skin layer consisted of a mixture of 75% of LDPE and 25% of m-LLDPE. The core consisted of a mixture of PP homopolymer with 20% of m-LLDPE. The thickness ratio of the core layer to one skin layer of the symmetric structure was set to 1:3. The melt and die temperature was set to 210°C and the temperature of the cooling air was set to 15°C. The blow-up-ratio was set to 1:2. In a separate step the films were stretched in a conventional MDO-stretching equipment between rolls heated to 110°C. The stretching ratio was set to 1:5 and 1:7.

The properties measured and are summarized in table 3 below.

| **Stretching ratio** | **Non-stretched** | **Stretching 1:5** | **Stretching 1:7** |
|---|---|---|---|
| Thickness deviation [µm] | 4.1 | 2.2 | 0.9 |
| Thickness [µm] | 55 | 57 | 41 |
| Modulus in MD [MPa] | 671 | 1086 | 1245 |
| Modulus in CD [MPa] | 626 | 760 | 995 |
| Gloss 60° | 90 | 93 | 110 |

It can be seen that the stiffness especially in MD direction increases significantly, and the thickness profile even improves. Furthermore the gloss is increased.

## Claims

1. Transparent and stiff coextruded polypropylene blown film with ink-printable skin layer(s) bonded to the base or core layer without intermediate layers
**characterized in that**
the core layer or base layer comprises at least 50 % of of at least one of a polypropylene homopolymer, a polypropylene random copolymer or a heterophasic polypropylene copolymer and
the skin layer(s) consists (consist) of
a. a mixture of at least 50% of low density polyethylene and at least 5 % of metallocene linear low density polyethylene and up to 5 % of common additives or
b. a polypropylene random copolymer with a MFI between 0.8 and 3.0 g/10 min (ISO1133 at 230°C, 2.16 kg) mixed with up to 50% of a low density polyethylene, a linear low density polyethylene or a metallocene linear low density polyethylene, MFI 0,5 to 3,5 g/10min and up to 15 % common additives.

2. Film according to claim 1, **characterized in that** the core layer is a mixture of polypropylene random coplymer and polypropylene homopolymer with at least 5 % of polypropylene random copolymer and up to 5 % of common additives.

3. Blown film according to claim 1 or 2, **characterized in that** the core layer is a mixture of polypropylene random coplymer, heterophasic polypropylene copolymer or polypropylene homopolymer with up to 40% of metallocene linear low density polyethylene and up to 5 % of common additives.

4. Blown film according to any one of claims 1 to 3, **characterized in that** the skin layer(s) consists (consist) of a mixture of the polypropylene random copolymer with 5 to 30 % of a low density polyethylene, a linear low density polyethylene or a metallocene linear low density polyethylene and up to 5 % common additives.

5. Blown film according to any one of claims 1 to 3, **characterized in that** the skin layer(s) consists (consist) of the polypropylene random copolymer and up to 15 % common additives, preferably up to 10 % of a polar, anionic or preferably cationic additive improving printability and up to 5 % other common additives.

6. Blown film according to any one of claims 1 to 3, **characterized in that** the skin layer(s) consists (consist) of a mixture of at least 70% of low density polyethylene and at least 10 % of metallocene linear low density polyethylene and up to 5 % of common additives.

7. Blown film according to any one of claims 1 to 6, **characterized in that** the the skin layer is corona-treated with at least 42 dyn, preferably at least 44 dyn, especially at least 46 dyn.

8. Blown film according to any one of claims 1 to 7, **characterized in that** the ratio of the skin layer thickness to the core or base layer thickness is set to between 1:1 and 1:5, preferably between 1:1 and 1:4.

9. Blown film according to any one of claims 1 to 8, **characterized in that** the film is stretched in machine direction after blown film extrusion.

10. Blown film according to claim 9, **characterized in that** the machine direction stretching is done in-line directly after blown film extrusion, without rewinding.

11. Blown film according to any one of claims 1 to 10, **characterized in that** the common additives are one or more of colorants, mineralic fillers, processing aids, antistatic agents, antislip agents, stabilizers, antioxidants, acid neutralizing agents, ultraviolet absorbers, antiblocking agents and antifogging agents.

12. Blown film according to any one of claims 1 to 11, **characterized in that** the addtive comprises a polar, anionic or cationic substance that improves printability.

13. Use of the film according to any one of claims 1 to 12 as label facestock for self-adhesive, wrap-around, roll-on, shrink-on, or in-mould label applications.

14. Use of the film according to any one of claims 1 to 12 as film for lamination with polyethylene terephthalate, aluminium, polyamide, or ethylene vinyl alcohol polymer for packaging applications.
